# EUROPEAN PATENT SPECIFICATION

(11) **EP 1 022 433 B1**
(45) Date of publication and mention of the grant of the patent: **17.11.2004**
(21) Application number: 00300525.3
(22) Date of filing: 25.01.2000
(51) Int. Cl.: F01D 5/18, F01D 5/08, F02C 7/16

(54) **Debris trap in a turbine cooling system**
Fremdkörperabscheider in einem Turbinenkühlsystem
Piège pour particules dans un système de refroidissement pour turbines

(30) Priority: 25.01.1999 US 237095
(43) Date of publication of application: 26.07.2000
(73) Proprietor: GENERAL ELECTRIC COMPANY, Schenectady, NY 12345 (US)
(72) Inventor: Wilson, Ian David, Clifton Park, New York 12065 (US)
(74) Representative: Pedder, James Cuthbert

(56) References cited:
- EP-A- 0 735 238
- US-A- 3 443 790

## Description

Steam cooling of gas turbine buckets is susceptible to debris generated downstream of filters, in that the debris may collect in radially outer extremities (tip turns) of the buckets that are to be cooled, thereby building up a cooling path blockage over time and reducing the cooling capability at the bucket tip by forming a layer of debris that insulates the hot bucket tip surfaces from the cooling medium.

This invention provides a cooling circuit arrangement see e.g. EP 0735238 or EP 1013895 which collects and traps debris present in the steam cooling medium in a region of the bucket cooling circuit where it does not effect the cooling task of the steam, i.e., upstream of the buckets.

More specifically, the path of the cooling steam supplied to the first and second stage buckets of a gas turbine manufactured by the assignee of this invention passes through a relatively low velocity steam manifold before exiting the manifold through higher velocity feed tubes which carry the steam to the buckets. At this location in the cooling path, centrifugal loads on the debris force the debris to collect in a radially outermost region of the manifold, away from the primary flow stream lines. To this end, the manifold extends radially beyond the bucket feed tubes to thereby create a recessed trap region which collects the solid particles and other debris under the centrifugal loading created by the rotating rotor. In the exemplary embodiment, here are ten such manifolds arranged in an annular array about the turbine rotor, each manifold segment extending approximately 36°.

According to the present invention, there is provided a gas turbine having a rotor and a plurality of stages, each stage comprising a row of buckets supported on a wheel mounted on the rotor for rotation therewith; and wherein the buckets of at least one of the stages are cooled by air or steam, the turbine having at least one axially extending coolant supply conduit communicating with a coolant supply manifold; one or more axially extending coolant feed tubes connected to the manifold at a location radially outwardly of the coolant supply conduit, the one or more feed tubes being arranged to supply coolant to one or more buckets of at least one of the plurality of stages; the manifold extending radially beyond the one or more axially extending feed tubes to thereby create a debris trap region for collecting debris under centrifugal loading caused by rotation of the rotor.

The invention will now be described in greater detail, by way of example, with reference to the drawings, in which:-
FIGURE 1 is a fragmentary perspective view, with portions broken out and in cross section, of a bore tube assembly with a surrounding aft bearing and a portion of the main rotor constructed in accordance with the present invention, and
FIGURE 2 is an enlarged cross sectional detail of a portion of the bore tube assembly of Figure 1.

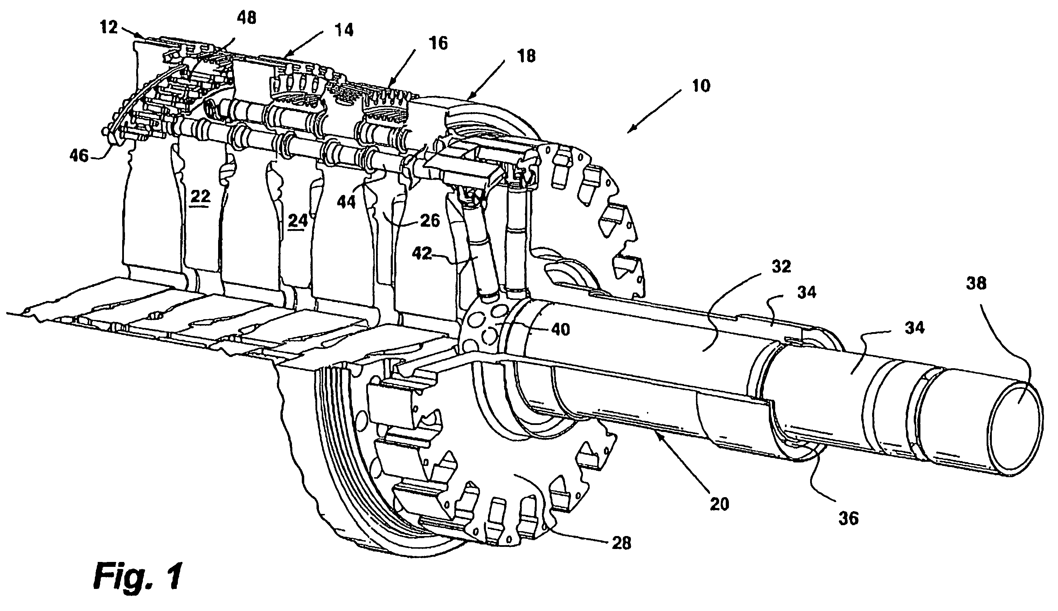

With reference to Figure 1, part of a turbine rotor assembly is shown at 10. The turbine section of the machine includes a number of stages (for example, four successive stages) comprising turbine wheels 12, 14, 16 and 18 mounted on the rotor shaft 20 for rotation therewith. Each wheel carries a row of buckets (not shown) which project radially outwardly of the wheels and are arranged alternately, in an axial direction, between fixed nozzles (also not shown). Between the wheels, there are provided spacer disks 22, 24 and 26. A coolant supply and return aft disk 28 forming an integral part of an aft shaft 30 is provided on the aft side of the last stage turbine wheel 18. It will be appreciated that the wheels and disks are secured to one another by a plurality of circumferentially spaced, axially extending bolts (not shown) as is conventional in gas turbine constructions.

Cooling steam is supplied to the turbine buckets as part of a closed circuit steam cooling supply and return system in a combined cycle system, i.e., split off from the high pressure steam turbine exhaust or supplied from an existing implant supply.

The cooling arrangement includes an outer tube 32 and an inner tube 34, concentric therewith, about the axis of rotation A of the rotor shaft 20. The outer and inner tubes 32 and 34, respectively, define an annular cooling steam supply passage 36, while the inner tube 34 provides a spent cooling steam return passage 38. Passage 36 communicates with a manifold 40 which, in turn, supplies cooling steam via radial supply conduits 42 to a plurality of radially outer, axially extending supply tubes 44 (only one of which is shown), each one of which supplies cooling steam to a respective manifold segment 46. In an exemplary embodiment, there are ten such manifold segments, each of which extends about 36° and all of which combine to form a 360° manifold located between the first and second stage wheels 12 and 14.

It is the manifold segments 46 which are the focus of this invention. Each manifold segment 46 connects to a plurality of relatively short feed tubes 48 which feed cooling steam to the buckets of the first and second stages. It will be understood that there are several feed tubes connected to each segment, so that each bucket is supplied individually with cooling steam.

Return tubes and manifolds are also employed to carry the coolant out of the buckets, but these components form no part of the invention.

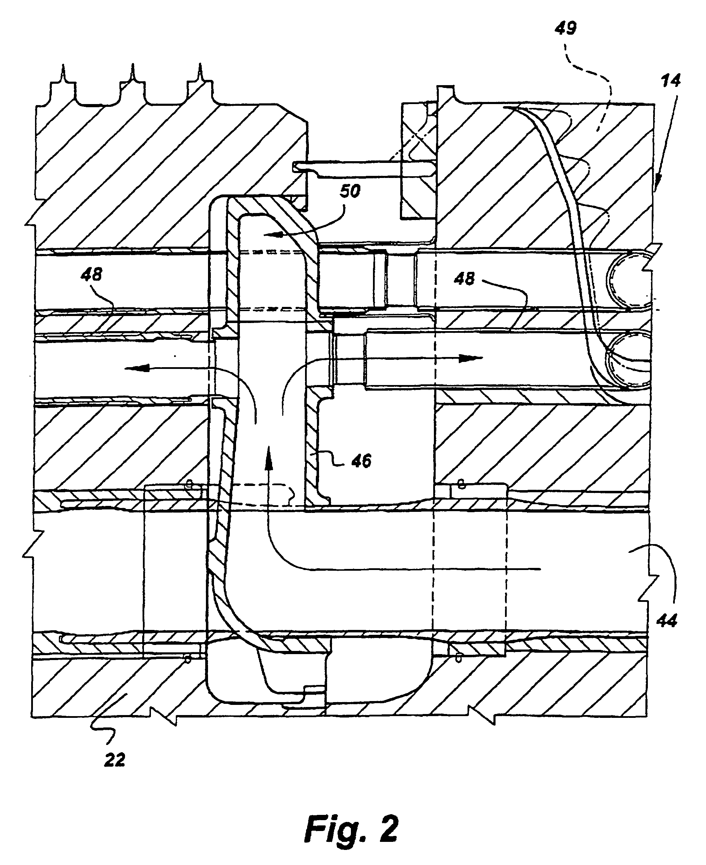

With specific reference now to Figure 2, it may be seen that the manifold segment 46 is extended radially beyond the individual feed tubes 48 to thereby create a debris trap region 50. This region is effective to trap solid debris because of the centrifugal force created by rotation of the rotor 12. Thus, any solid particles or other debris will follow the steam flow radially outwardly in the relatively low velocity steam manifold 46, but while the pressurized cooling steam will flow into the higher velocity feed tubes 48, leading to the first and second stage buckets (the lower portion of one such bucket is shown in phantom at 49 in Figure 2), solid particles and other debris will collect in the debris trap region 50 under centrifugal loading, away from the primary flow stream lines. Such debris normally sticks to the interior surface of the manifold in region 50 and accumulates there until normal service shutdowns, during which time the debris regions can be cleaned.

The specific manifold and feed tube configuration as described above is exemplary only, as the debris trap utilizing centrifugal loading principles is applicable to various cooling steam supply circuits in turbo-machinery generally.

## Claims

1. A turbine having a rotor (20) and a plurality of stages, each stage comprising a row of buckets supported on a wheel (12, 14, 16) mounted on the rotor for rotation therewith; and wherein the buckets of at least one of said stages are cooled by air or steam, the turbine **characterised by** having:
at least one axially extending coolant supply conduit (44) communicating with an at least partially annular coolant supply manifold (46); one or more axially extending coolant feed tubes (48) connected to said manifold (46) at a location radially outwardly of said coolant supply conduit (44), said one or more feed tubes (48) being arranged to supply coolant to one or more buckets of at least one of said plurality of stages said manifold (46) extending radially beyond said one or more axially extending feed tubes (48) to thereby create a debris trap region (50) for collecting debris under centrifugal loading caused by rotation of the rotor.

2. The turbine according to claim 1, wherein said coolant supply manifold extends through an angle of about 36°.

3. The turbine according to claim 1 or 2, wherein a plurality of axially extending feed tubes are connected to said coolant supply manifold.

4. The turbine of claim 3 wherein said plurality of axially extending feed tubes are arranged to supply coolant in opposite axial directions to buckets in adjacent stages.

5. The turbine of any preceding claim, wherein said coolant supply manifold is located between first and second stages of the turbine.

6. The turbine of any preceding claim, wherein a plurality of said coolant supply manifolds are arranged about the rotor, said plurality of coolant supply manifolds connected to a sufficient number of axial coolant feed tubes to cool each bucket in two adjacent stages.

## Patentansprüche

1. Turbine mit einem Rotor (20) und mehreren Stufen, die jeweils eine Reihe von Schaufeln aufweisen, die auf einem Rad (12,14,16) gehaltert sind, das auf dem Rotor für eine Rotation damit angebracht ist, wobei die Schaufeln von wenigstens einer der Stufen durch Luft oder Dampf gekühlt werden, wobei die Turbine **dadurch gekennzeichnet ist, dass** sie
wenigstens eine axial verlaufende Kühlmittel-Versorgungsleitung (44), die mit einem wenigstens teilweise ringförmigen Kühlmittel-Versorgungsverteiler (46) in Verbindung steht, und eine oder mehrere axial verlaufende Kühlmittel-Zufuhrleitungen (48) aufweist, die mit dem Verteiler (46) an einer Stelle radial aussen von der Kühlmittel-Versorgungsleitung (44) verbunden sind, wobei die eine oder mehreren Zufuhrleitungen (48) derart angeordnet sind, dass sie einer oder mehreren Schaufeln von wenigstens einer der Stufen Kühlmittel zuführen, wobei sich der Verteiler (46) über die eine oder mehreren der axial verlaufenden Zufuhrleitungen (49) hinaus erstreckt, um dadurch einen Schmutzteilchen-Einschlussbereich (50) zu erzeugen zum Sammeln von Schmutzteilchen unter Zentrifugalbelastung, die durch Rotation des Rotors bewirkt ist.

2. Turbine nach Anspruch 1, wobei sich der Kühlmittel-Versorgungsverteiler über einen Winkel von etwa 36° erstreckt.

3. Turbine nach Anspruch 1 oder 2, wobei mehrere axial verlaufende Zufuhrleitungen mit dem Kühlmittel-Versorgungsverteiler verbunden sind.

4. Turbine nach Anspruch 3, wobei die mehreren axial verlaufenden Zufuhrleitungen zum Zuführen von Kühlmittel in entgegengesetzten axialen Richtungen zu Schaufeln in benachbarten Stufen angeordnet sind.

5. Turbine nach einem der vorstehenden Ansprüche, wobei der Kühlmittel-Versorgungsverteiler zwischen ersten und zweiten Stufen der Turbine angeordnet ist.

6. Turbine nach einem der vorstehenden Ansprüche, wobei mehrere Kühlmittel-Versorgungsverteiler um den Rotor herum angeordnet sind, wobei die mehreren Kühlmittel-Versorgungsverteiler mit einer ausreichenden Zahl von axialen Kühlmittel Zufuhrleitungen verbunden sind, um jede Schaufel in zwei benachbarten Stufen zu kühlen.

## Revendications

1. Turbine comportant un rotor (20) et une pluralité d'étages, chaque étage comprenant une rangée d'aubes supportées par une roue (12, 14, 16) montée sur le rotor pour tourner avec celui-ci, et dans laquelle les aubes d'au moins l'un desdits étages sont refroidies par air ou par vapeur, la turbine étant **caractérisée en ce qu'**elle comporte :
au moins un conduit, s'étendant axialement, d'alimentation (44) en fluide de refroidissement, communiquant avec un collecteur, au moins partiellement annulaire, d'alimentation (46) en fluide de refroidissement, un ou plusieurs tubes, s'étendant axialement, d'alimentation (48) en fluide de refroidissement connectés audit collecteur (46) en un endroit situé radialement à l'extérieur dudit conduit d'alimentation (44) en fluide de refroidissement, lesdits un ou plusieurs tubes d'alimentation (48) étant adaptés pour fournir du fluide de refroidissement à une ou plusieurs aubes d'au moins un étage de ladite pluralité d'étages, ledit collecteur (46) s'étendant radialement au-delà desdits un ou plusieurs tubes d'alimentation s'étendant axialement (48) pour créer ainsi une région formant piège (50) à débris destinée à recueillir les débris sous l'effet de la charge centrifuge provoquée par la rotation du rotor.

2. Turbine selon la revendication 1, dans laquelle ledit collecteur d'alimentation en fluide de refroidissement s'étend sur un angle d'environ 36°.

3. Turbine selon la revendication 1 ou 2, dans laquelle une pluralité de tubes d'alimentation s'étendant axialement sont connectés audit collecteur d'alimentation en fluide de refroidissement.

4. Turbine selon la revendication 3, dans laquelle ladite pluralité de tubes d'alimentation s'étendant axialement sont adaptés pour amener du fluide de refroidissement aux aubes des étages voisins dans des directions axiales opposées.

5. Turbine selon l'une quelconque des revendications précédentes, dans laquelle ledit collecteur d'alimentation en fluide de refroidissement est situé entre un premier et un deuxième étage de la turbine.

6. Turbine selon l'une quelconque des revendications précédentes, dans laquelle une pluralité desdits collecteurs d'alimentation en fluide de refroidissement sont placés autour du rotor, ladite pluralité de collecteurs d'alimentation en fluide de refroidissement étant connectés à un nombre suffisant de tubes axiaux d'alimentation en fluide de refroidissement pour refroidir toutes les aubes de deux étages voisins.
